# EUROPEAN PATENT APPLICATION

(11) **EP 2 138 949 A2**
(43) Date of publication of application: **30.12.2009**
(21) Application number: 08018922.8
(22) Date of filing: 29.10.2008
(51) Int. Cl.: G06K 7/10, G06K 7/00

(54) **Array reading system**

(30) Priority: 25.06.2008 TW 97123761
(71) Applicant: G-Time Electronic Co., Ltd., Hsinchu City (TW)
(72) Inventor: Wu, Che-Ming, Dongshih Township Taichung County 423 (TW); Hou, Tien-Fa, East District Hsinchu City 300 (TW)
(74) Representative: Epping - Hermann - Fischer

(57) **Abstract**

The present invention disclose an array reading system for detecting at least one object that has at least one tag identifier provided thereon, which comprises an array reader, a digital control circuit, and a processor. The array reader includes a plurality of image sensors for reading the at least one tag identifier separately, and a multi-channel analog circuit. The digital control circuit is electrically connected to the multi-channel analog circuit of the array reader for scanning the at least one tag identifier on the object to thereby detect a manner in which the object is positioned. The processor identifies based on the positioning manner of the object and the tag identifier whether the object is put at a correct position. With these arrangements, it is possible to quickly read data of the tag identifier and locate the position of the object using the array reader.

## Description

### FIELD OF THE INVENTION

The present invention relates to an array reading system, and more particularly to an array reading system that utilizes an array reader having a plurality of image sensors to quickly scan different tag identifiers on an object and determine the position of the object.

### BACKGROUND OF THE INVENTION

Currently, techniques for reading identifiers, such as bar code and radio-frequency identification (RFID) tag, have been widely used in security identification, supply chain management, library management, product tracking, access control, etc. There are prior art in connection with identification tags and active identifying of positions of such identification tags. Taiwan Invention Patent Number 1258712 discloses a RFID card reader with multi-dimensional antenna array, in which the RFID technique is employed to detect and read an identifier and to locate the position of the identifier. However, the RFID card reader disclosed in Taiwan Invention Patent Number I258712 necessitates the use of a large quantity of RFID tags.

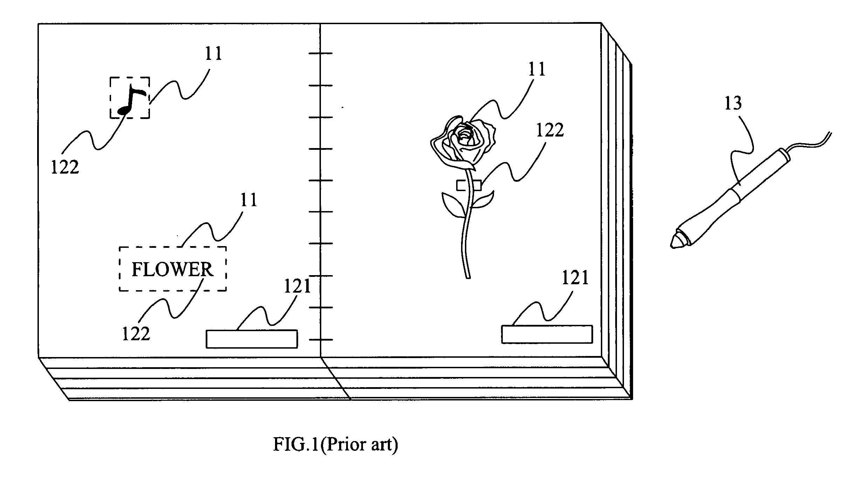

Besides, Taiwan Patent Number I231459 discloses a vocal learning system, in which identifiers are printed on different objects shown on an audiobook to achieve the purpose of identifying the objects. Fig. 1 shows a conventional reading system employed in the above-mentioned prior art vocal learning system. As shown, the reading system includes a large number of pictures 11 shown on pages of an audiobook, a digital speech signal processing unit (not shown), a plurality of bar codes 121 printed below each of the pictures 11, or an identifiers 122 located hidden in each of the pictures 11. The bar codes 121 and the identifiers 122 contain information for the digital speech signal processing unit to identify the pictures 11. A child can use an identification pen 13 to scan one bar code 121 or one identifier 122 for reading one corresponding picture 11. The digital speech signal processing unit identifies the picture 11 being read by the identification pen 13 and generates a digital speech signal. The digital speech signal is decoded and sent to the audiobook, so that the audiobook outputs speech corresponds to the picture 11. However, the identification pen 13 is subject to missing, and is a reader provided with only one single image sensor. Since the image sensor must be located within the bar code 121 to achieve the purpose of reading the corresponding picture 11, the identification pen 13 is not convenient for use. Further, since the conventional reading system includes only an identification pen 13 to read one piece of shadow identifiers once, the identifiers 122 can only be passively read by a user using the identification pen 13. The conventional reading system itself does not provide the function of active scanning to detect and locate the identifiers 122.

### SUMMARY OF THE INVENTION

Therefore, one of objectives of the present invention is to provide an array reading system to overcome the problem of passive reading manner in the conventional reading system and to effectively reduce the volume of the object to be detected and the manufacturing cost of the reading system.

The object is solved by the subject matter of the independent claim. Advantageous embodiments are given by the sub claims.

To achieve the above and other objects, the array reading system according to the present invention is configured to detect at least one object having at least one tag identifier, and comprises an array reader, a digital control circuit and a processor. The array reader includes a plurality of image sensors for respectively reading a specific one of the tag identifiers of the object and generating an analog detection data. The digital control circuit is electrically connected to the array reader for receiving the analog detection data output by the array reader and converting the received analog detection data into a digital detection data. The processor determines, based on the digital detection data, a manner in which the object is positioned and whether the object is positioned in a correct manner.

Preferably, the array reader can further include a multi-channel analog circuit for turning on/off the image sensors separately. The multi-channel analog circuit not only has the function of turning on/off the image sensors separately, but also has the function of amplifying and filtering to amplify the analog signal of the image sensors into a digital signal. The multi-channel analog circuit can be a multi-channel analog to digital converter, or a circuit including amplifiers for amplifying and filtering analog signals. The multi-channel analog circuit also receives the analog detection data generated by the image sensor that has been turned on by the multi-channel analog circuit. The digital control circuit is electrically connected to the multi-channel analog circuit for controlling the on/off of different channels of the multi-channel analog circuit.

Preferably, the digital control circuit can further include a digital serial interface, such as a serial peripheral interface (SPI) or a universal serial bus (USB) interface. Via respective digital serial interfaces, the digital control circuit and any other digital control circuits are electrically connected to the processor in series or in parallel. Alternatively, the digital serial interface can be an independent external circuit configured between the digital control circuit and the processor.

With the above arrangements, the array reading system according to the present invention has at least the following advantages:
(1) The array reading system utilizes an array reader having a plurality of image sensors to quickly scan different tag identifiers provided on an object. Therefore, it is possible to overcome the problem of failing to actively scan and determine the object position as found in the conventional reader having one single image sensor.
(2) The array reading system is able to identify whether an object is positioned correctly or upside down by reading a plurality of tag identifiers that are provided on the object and have different data recorded thereon, and is able to know the object position in a space through a multi-dimensional arrangement of a plurality of image sensors.
(3) The object to be read by the array reading system uses imprinted images, bar codes, or the like as its tag identifiers to largely reduce the use of RFID tags and accordingly, the manufacturing cost of the array reading system.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 schematically illustrates a conventional reading system;
Fig. 2 is a block diagram of an array reading system according to a first embodiment of the present invention;
Fig. 3 is a schematic view of the array reading system according to the first embodiment of the present invention;
Fig. 4 is a schematic view of an array reading system according to a second embodiment of the present invention; and
Fig. 5 is a schematic view of an array reading system according to a third embodiment of the present invention.

### DETAILED DESCRIPTION OF THE PREFERRED EMBODIMENTS

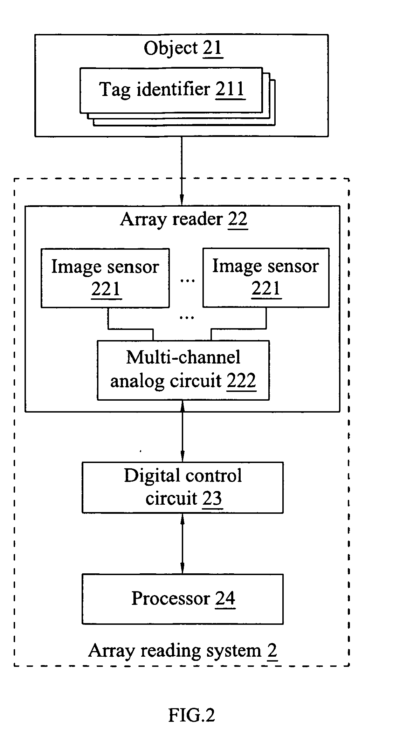

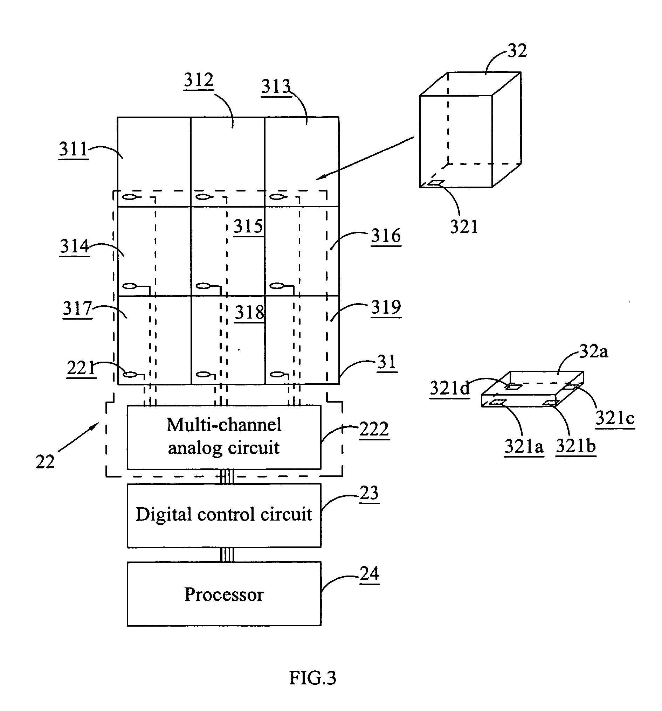

Please refer to Figs. 2 and 3 that are block diagram and schematic view, respectively, of an array reading system 2 according to a first embodiment of the present invention. As can be seen from Fig. 2, the array reading system 2 in the first embodiment includes an array reader 22, a digital control circuit 23, and a processor 24. The array reader 22 includes a plurality of image sensors 221 and a multi-channel analog circuit 222. Each of The image sensors 221 has a light source and is used for detecting a plurality of tag identifiers 211 provided on an object 21 and generating an analog detection data. Preferably, the tag identifier 211 can be a bar code, a pattern identifier (ID) code, an image ID code, or a hidden ID code, and is printed on, glued to, or otherwise attached to the object 21. The object 21 can be a flat plate or a polyhedron, such as a cube. Preferably, the image sensor 221 can, be a bar code reader, a complementary metal-oxide semiconductor image sensor, or an optical image sensor.

The multi-channel analog circuit 222 is used to turn on/off the image sensors 221 separately, and receive the analog detection data generated by the image sensor 221 that is turned on by the multi-channel analog circuit 222. The digital control circuit 23 is electrically connected to the multi-channel analog circuit 222 for controlling the multi-channel analog circuit 222 to turn on/off and select a certain channel thereof. For example, the digital control circuit 23 can turn on the image sensors 221 in a predetermined sequence, such that when one of the image sensors 221 is turned on, all other image sensors 221 are turned off. In this manner, the digital control circuit 23 can control the multi-channel analog circuit 222 to scan and switch among all the image sensors 221 to read the analog detection data generated by each of the image sensors 221. The digital control circuit 23 also converts the analog detection data into digital detection data.

The processor 24 is electrically connected to the digital control circuit 23, so as to output command or signal to the digital control circuit 23 for controlling the multi-channel analog circuit 222 to scan and switch among the image sensors 221 of the array reader 22. The processor 24 also identifies, based on the digital detection data, at where the object 21 is positioned.

In Fig. 3, there are 9 image sensors 221 separately configured in 9 different areas 311 to 319 of the platform 31. Meanwhile, the processor 24 is internally built with data of corresponding relation between the image sensors 221 and the 9 areas 311 to 319. The processor 24 transmits control signals to the digital control circuit 23 at a constant frequency, so as to control the digital control circuit 23 to drive the multi-channel analog circuit 222 to turn on/off the 9 image sensors 221 in sequence from image sensor 311 to image sensor 319.

For example, when a user puts an object 32 in the area 313 with the tag identifier 321 on the object 32 being located at a position within a sensing range of the image sensor 221 in the area 313, the processor 24 controls the digital control circuit 23 to sequentially scan the 9 image sensors 221, and a digital detection data is obtained in the third sequence of the scan. The processor 24 then compares the obtained digital detection data with the internal data of corresponding relation to find out that the obtained digital detection data is generated by the image sensor 221 in the area 313. Therefore, the processor 24 is able to identify the object 32 is positioned in the area 313. Similarly, when the object 32 is put in the area 318 with the tag identifier 321 of the object 32 located within the sensing range of the image sensor 221 in the area 318, the processor 24 receives digital detection data obtained in the eighth sequence of the scan and can therefore identify the object 32 is positioned in the area 318. Moreover, when a plurality of objects 32 are put in different areas, the processor 24 can still identify the positions of these objects 32 according to the above-described principle.

If each of the objects 32 is provided at least one specific tag identifier 321 corresponding thereto, that is, different tag identifiers 321 are separately provided on different objects 32, and the processor 24 is also internally built with data of corresponding relation between the tag identifiers 321 and the objects 32, the processor 24 can then further determine the position of different object 32. The array reading system according to the present invention can be applied in various kinds of game systems, including but not limited to puzzle game systems, learning systems, such as an alphabet learning system, etc.

Preferably, the array reading system of the present invention can further include a storage module and an output module, depending on actual need. The output module can be, for example, a speaker, a display screen, etc. The storage module is used to store data about the correct positions of a plurality of tag identifiers 321 and game data or learning data corresponding thereto. When the processor 24 identifies the position of the object 32 and the identified position matches the correct position for the tag identifier 321 on the object 32, the processor 24 then drives the speaker to output corresponding sound or drives the display screen to show corresponding game data or learning data to achieve the playing or learning effect.

It is also possible an object is provided on one surface with a plurality of tag identifiers as shown in Fig. 3. In Fig. 3, an object 32a in the form of a flat plate is provided on a bottom surface with four tag identifiers 321 a, 321 b, 321 c, and 321 d, and the processor 24 is internally built with data of corresponding relation between the tag identifiers 321a-321d and different manners of positioning the object 32a. With these arrangements, the processor 24 is able to identify not only the location of the object 32a, but also the manner in which the object 32a is positioned. For example, the processor 24 can identify the object 32a is positioned while having been rotated by a certain orientation. More specifically, for example, when the processor 24 receives data of the tag identifier 321 a, it indicates that the object 32a is correctly positioned with normal manner; or, when the processor 24 receives data of the tag identifier 321b, it indicates the object 32a is positioned while having been horizontally turned clockwise by 90 degrees; or, when the processor 24 received data of the tag identifier 321c, it indicates the object 32a is positioned while having been horizontally turned clockwise by 180 degrees; or when the processor 24 receives data of the tag identifier 321 d, it indicates the object 32a is positioned while having been horizontally turned clockwise by 270 degrees or counterclockwise by 90 degrees. Similarly, when the object 32a is also provided on a top surface with different tag identifiers, the processor 24 would then be able to determine whether the object 32a is positioned with its bottom surface facing downward or upward. Alternatively, when the object is a polyhedron, such as the cubic object 32 shown in Fig. 3, and is provided on each of the surfaces thereof with different tag identifiers, and the processor 24 is internally built with data corresponding to these tag identifiers, the processor 24 would then be able to determine an exact manner from more different manners in which the object is positioned.

Preferably, the multi-channel analog circuit 222 includes a logic circuit and a multiplexer or a plurality of switches to implement the above-mentioned function of switching among different image sensors 221. In the case that the multiplexer is used, the multiplexer has a plurality of inputs separately electrically connected to the image sensors 221 for receiving analog detection signals generated by the image sensors 221; an output; and a control end electrically connected to the logic circuit. The logic circuit receives and processes a channel selection signal from the digital control circuit 23 to produce a logic signal representing the channel to be selected, and sends the logic signal to the control end of the multiplexer for controlling the output of the multiplexer to output one of the analog detection signals received at the inputs that is corresponding to the selected channel. Similarly, in the case that the switches are used, the switches are separately electrically connected to different image sensors 221, and are separately controlled to turn on/off by a logic signal which is generated by the logic circuit and represents a channel to be selected. In this manner, it is possible to switch among different image sensors 221 to output an analog detection signal generated by a desired image sensor 221.

Alternatively, the array reading system of the present invention can be implemented without using the multi-channel analog circuit 222. In this case, a plurality of digital control circuits 23 are used in the array reading system, and the digital control circuits 23 are in one-to-one correspondence to the image sensors 221 for receiving the analog detection data from respective corresponding image sensors 221. The digital detection data generated by the plurality of digital control circuits 23 are then sent to the processor 24.

In addition to read the analog detection signals from different image sensors 221 by switching among the image sensors 221 under control of the digital control circuit 23, the multi-channel analog circuit 222 can also include a signal amplifying circuit and a filtering circuit, depending on actual needs, so as to amplify and filter the analog signals received from the image sensors 221 for subsequent signal processing.

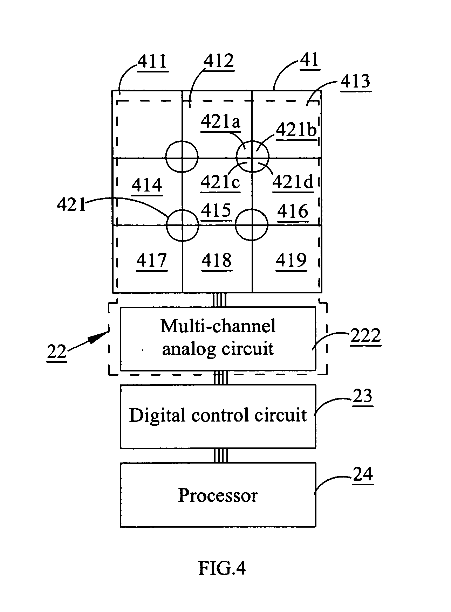

Fig. 4 is a block diagram of an array reading system according to a second embodiment of the present invention. The second embodiment is different from the first embodiment in that, the image sensors 421 of the array reader 22 in the second embodiment are provided on a platform 41 among different areas 411 to 419 thereof. In the second embodiment, the sensing area of each image sensor 421 is divided into four smaller sensing areas 421 a, 421 b, 421 c, and 421 d for detecting the tag identifiers on an object located at different sensing areas. Since the image sensor 421 is used to acquire external images, images of any thing within the sensing range of the image sensors 421 would be captured by the image sensors 421. The processor 24 can separate an image into several parts by image processing, and then performs the identifying of the tag identifier according to the image in each part. In this manner, it is possible to achieve the effect of detecting more than one area with only one image sensor. Compared to the first embodiment in which 9 image sensors 221 are required to detect 9 areas, the second embodiment requires only 4 image sensors 421 to detect 9 areas and therefore provides the effect of reducing the manufacturing cost of the array reading system.

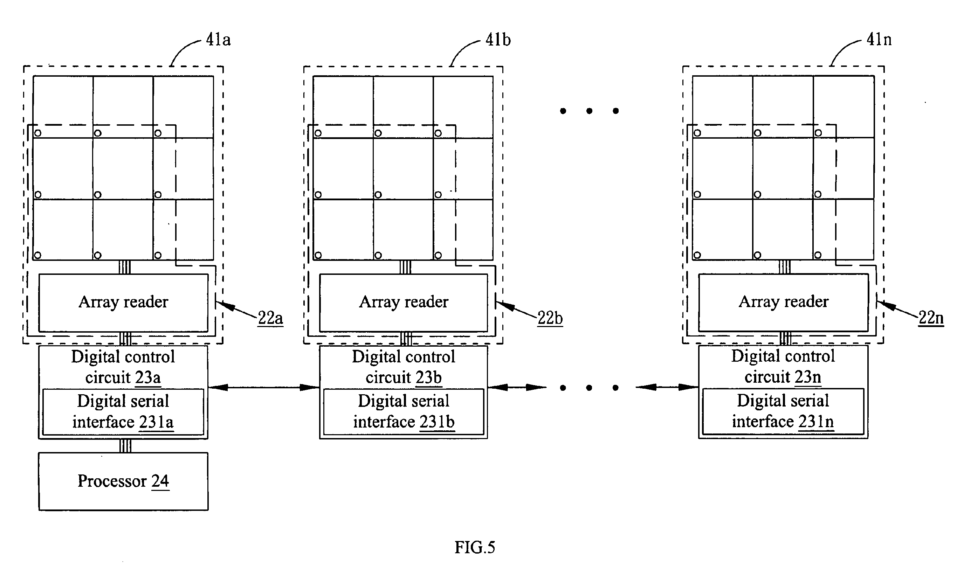

Fig. 5 is a block diagram of an array reading system according to a third embodiment of the present invention. As can be seen from Fig. 5, the third embodiment is different from the previous embodiments in that the digital control circuits 23a, 23b,..., and 23n further include an internally built digital serial interface 231a, 231b, ..., and 231n each. Preferably, the digital serial interface can be a serial peripheral interface (SPI) or a universal serial bus (USB) interface circuit. The digital control circuits 23a, 23b,..., and 23n are serially connected to the processor 24 via the digital serial interfaces 231a, 231b, ..., and 231n. Since each of the digital control circuits 23a, 23b, ..., and 23n is corresponding to a different identifier (id), the array reading system of the present invention can be expanded by serially connecting augmented array readers and digital control circuits to an existing array reader, so that the augmented array readers and digital control circuits are also electrically connected to the processor 24. Meanwhile, the processor 24 also records the identifiers of the augmented array readers, so as to separately send commands to different digital control circuits 23a, 23b, ...., and 23n according to the identifiers, and thereby control different array readers 22a, 22b, ..., and 22n to scan their respective image sensors in a predetermined sequence. In this manner, the array reading system can be expanded and maximized in a simplified manner.

Moreover, the digital control circuits 23a, 23b,..., and 23n are not necessarily connected to the processor 24 in series, but can be parallelly connected to the processor 24 via the digital serial interfaces 231a, 231b, ..., and 231n to achieve the same effect of simplifying the expansion and maximization of the array reading system. Further, the digital serial interfaces are not necessarily built in the digital control circuits but can be external circuits electrically connected to the digital control circuits to achieve the same effect.

The present invention has been described with some preferred embodiments thereof and it is understood that many changes and modifications in the described embodiments can be carried out without departing from the scope and the spirit of the invention that is intended to be limited only by the appended claims.

## Claims

1. An array reading system for detecting at least one object that has at least one tag identifier provided thereon, comprising:
an array reader including a plurality of image sensors and an analog circuit, wherein each of the image sensors is used to read the at least one tag identifier and generate an analog detection data, and the analog circuit is for receiving the analog detection data and then outputting the analog detection data;
a digital control circuit electrically connected to the array reader for receiving the analog detection data output by the analog circuit of the array reader and converting the received analog detection data into digital detection data; and
a processor electrically connected to the digital control circuit for identifying a position of the at least one object based on the digital detection data.

2. The array reading system as claimed in claim 1, wherein the analog circuit is a multi-channel analog circuit for turning on/off the image sensors separately, and receiving the analog detection data generated by one of the image sensors that has been turned on by the multi-channel analog circuit, and the digital control circuit is electrically connected to the multi-channel analog circuit for controlling the multi-channel analog circuit to turn on/off channel and select channel.

3. The array reading system as claimed in one of the preceding claims, further comprising a digital serial interface, via which the digital control circuit and any augmented digital control circuits are electrically connected to the processor in series or in parallel.

4. The array reading system as claimed in claim 3, wherein the digital serial interface is internally built in the digital control circuit.

5. The array reading system as claimed in claim 3 or 4, wherein the digital serial interface is selected from the group consisting of a serial peripheral interface (SPI) and a USB interface.

6. The array reading system as claimed in one of the preceding claims, wherein the processor further identifies, based on the digital detection data, whether the object is positioned in a correct manner.

7. The array reading system as claimed in one of the preceding claims, wherein the object is selected from the group consisting of a flat plate and a polyhedron.

8. The array reading system as claimed in one of the preceding claims, wherein the tag identifier is selected from the group consisting of a bar code, a pattern ID code, an image ID code, and a hidden identifier.

9. The array reading system as claimed in one of the preceding claims, wherein the image sensor is selected from the group consisting of a bar code reader, a complimentary metal-oxide semiconductor image sensor, and an optical image sensor.

10. The array reading system as claimed in one of the preceding claims, wherein the image sensor has a light source.
